# EUROPEAN PATENT SPECIFICATION

(11) **EP 1 689 599 B1**
(45) Date of publication and mention of the grant of the patent: **29.07.2009**
(21) Application number: 04797425.8
(22) Date of filing: 04.11.2004
(51) Int. Cl.: B60C 29/06

(54) **A PRESSURE RELIEF DEVICE FOR AN INFLATABLE TIRE**
DRUCKENTLASTUNGSVORRICHTUNG FÜR EINEN AUFBLASBAREN REIFEN
LIMITEUR DE PRESSION POUR PNEU GONFLABLE

(30) Priority: 04.11.2003 DK 200301640
(43) Date of publication of application: 16.08.2006
(73) Proprietor: Opfinderfabrikken Aps, 2942 Skodsborg (DK)
(72) Inventor: BADSTUE, Soren, DK-2930 Klampenborg (DK)
(74) Representative: Inspicos A/S
(86) International application number: PCT/DK2004/000763
(87) International publication number: WO 2005/042277

(56) References cited:
- US-A- 5 365 967
- US-A- 6 125 694

## Description

### Technical field

The present Invention relates to a pressure relief device for an Inflatable tire, In particular a vehicular tire. The device is Intended to release air from the tire when the pressure in the tire exceeds a certain threshold value or to prevent excess air from being forced Into the tire during inflation thereof.

### Background of the Invention

Various pressure relief devices for inflatable tires have been proposed in the prior art. US patent No. 3,830,249 discloses a device in which a pressure relief ball is maintained In a seated position by a force applied by a compression spring until the air pressure within the tire exceeds a set pressure. When the set pressure has been exceeded, the pressure relief ball is unseated from the body, and surplus air escapes from the tire via the pressure relief device.

US patent No. 4,660,590 is concerned with an inflation pressure regulator with a substantially friction-free flexing seal arrangement within a housing of the regulator which bypasses the tire when the pressure within the tire reaches a predetermined level. A sealing section of a flexure member is normally urged Into sealing contact with a seat surface owing to the force exerted against the flexure member by a spring/ring combination. When the tire has been inflated to the pressure rating of the regulator, the pressure in a fist chamber in the housing will exert sufficient force against the upper face of the flexure member to cause a flexing in a portion thereof and a consequential movement of the sealing section away from the seat surface, allowing air to escape via an exhaust aperture.

A further device is known from US patent No. 6,125,694, which discloses an audibly reporting pressure-relief, automatic tire assembly for use in interaction with preexisiting valve core stems on a tire.

US 5,365,967, upon which the preamble of claim 1 is based, discloses a tire pressure indicator including ports which are sealed over by a sealing O-ring. The O-ring is selected to be of a distension stength that permits air release through the ports only at selected overpressure situations.

### Summary of the invention

It Is an object of preferred embodiments of the present invention to provide a pressure relief device which can be mass produced with little variation in the threshold pressure. It is a further object of preferred embodiments of the Invention to provide a compact device which causes reduced inertial imbalance of a tire to which the device is mounted, as compared to known devices. It is a further object of preferred embodiments of the invention to provide a pressure relief device which Is resistant to wear and tear. It is a still further object of preferred embodiments of the invention to provide a device which allows for a variable threshold pressure level, or various embodiments of which may be manufactured with variable threshold pressures while maintaining low production costs.

The device of the present invention
comprises:
- a body having a chamber therein and defining a circumferential outer surface portion;
- an inflation valve arranged in the body;
- an overpressure valve arranged in the body for releasing air when the air pressure in the chamber exceeds a first predetermined pressure level, the overpressure valve comprising:
- at least one air conduit extending from the chamber through the body to the circumferential outer surface portion;
- a ring-shaped resilient member which is contractively fitted around the circumferential outer surface portion, so as to keep the air conduit in a normally closed state; the properties and dimensions of the resilient member being such that it is stretched when the air pressure in the chamber exceeds the first predetermined pressure level, so as to provide an air passage from the conduit to an exterior environment;
wherein a buttom portion of the body defines a cavity for receiving a valve of the tire centrally within the body, the cavity defining a threaded portion for screwing the device onto a threaded portion of a tire valve.

Thanks to the cavity and the threaded portion, the device is detachable and may be fitted on an exisiting tire valve.

It will be appreciated that the provision of a ring-shaped resilient member, the properties and dimensions of which define the first predetermined pressure level, allows for easy variation of the first predetermined pressure level, as the threshold pressure level may be changed by replacing the resilient member with another resilient member. If a user of the device of the invention does not wish to replace the resilient member with another one, he/she may alternatively exchange the entire device with another device which is provided with a resilient member corresponding to a pressure level according to the user's choice. As ring-shaped resilient members may be produced in large numbers with high manufacturing accuracy and yet at low costs, preferred embodiments of the Invention offer a cheap, but efficient alternative to known devices.

Moreover, the physical dimensions of preferred embodiments of the device of the invention, In particular a longitudinal dimension thereof, i.e. a dimension which extends transversely to the circumference of a tire when the device is mounted on a valve of a tire, may be relative small, as there is no need for one or more longitudinally extending coil springs arranged to maintain a relief member in a seated position. This in turn causes reduced inertial imbalance of a tire to which the device is mounted, as compared to known devices.

Those dimensions and properties of the resilient member which define the threshold pressure level may for example include the elasticity of the material or composition from which the member is made, the distortion of the member, and the thickness of the material or composition of the member. The mutual positioning of the air conduit and the ring-shaped resilient member may also influence the threshold pressure level, and a width of the ring-shaped resilient member as well as a cross-sectional area of the air conduit may also influence the threshold pressure level.

It should be understood that the air conduit and the chamber may be constituted by the same, i.e. by one single cavity, bore or cut-out in the housing.

In order to protect the resilient member against dirt and physical impacts, such as axial forces, the resilient member may be arranged in a reduced diameter section of the outer surface portion. The reduced diameter section may also serve to ensure that the resilient member is always mounted in its correct position or at least reduce the risk of mounting the resilient member in a wrong position. The air conduit preferably extends through the body in the reduced diameter section. Further protection of the resilient member and/or of a portion of the body may be obtained by covering at least a top portion of the body with a protective cover or cap. The protective cover or cap may also serve to protect the inflation valve in the body, which is accessible from the outside via a passage or opening in the body. Preferably, the cover is releasably connected to the body, so that it may be removed for inflation of the tire.

In addition to the resilient member, there may be provided a further closure means in the overpressure valve, e.g. a spring element exerting a closing force on a closure element, e.g. a distorted compression spring arranged centrally within the body, so that the closure element opens at a second predetermined pressure level. For example, the closure element may be in contact with an inner collar portion in the body, so that air is not allowed to flow into the housing, unless the air pressure in the tire exceeds the second predetermined pressure level. When the air pressure exceeds the second predetermined pressure level, the spring is compressed, and the closure element lifts off the collar, and air is allowed to flow into the chamber. In some embodiments of the invention, the threshold pressure level at which the closure element opens, i.e. the second predetermined pressure level, is larger than the threshold pressure level of the ring-shaped resilient member, i.e. the first predetermined pressure level. This ensures that air may flow out of the device to its surroundings immediately when the closure element opens. Alternatively, the threshold pressure level of the closure element Is smaller than the threshold pressure level of the resilient member, so that the conduit to the exterior environment does not open immediately upon opening of the closure element. In yet further embodiments, the two threshold pressure levels are substantially equal. The resilient member and the further closure means ensure that if one of them is defect, e.g. when the spring or the resilient member is broken, then the other one will still work. Furthermore, one of the two closure means may be arranged to emit an acoustic signal, e.g. a whistling tone when air passes therethrough, whereas the other one may be provided to obtain the desired opening/closing function.

In case the overpressure valve is defect, e.g. In case the resilient member is blocked, it may be desirable that the device comprises a failsafe means for ensuring that air may escape out of the device In order to prevent pressure from building up in the device with the risk of exploding the device or the tire which is being inflated. One such failsafe means may e.g. comprise a weakened section in the body, the properties of which are such that it breaks at a pressure which is higher than at least one of said first and second predetermined pressure level. For example, a section of the body's outer wall may have a reduced thickness, so that the wall breaks at a certain pressure.

In order to release a stem of a tire valve, the device may preferably include a pin which is arranged to be able to slide axially in a first passageway in the body, sliding of the pin being caused by an adequate tire inflation device, such as a pump or compressor. The pin may thus be able to slide between a first position in which It cannot release the stem of the tire, and a second position, in which it can release the stem. Air may, for example, pass past the pin and into the tire in an annular passage extending along an outer circumference of the pin. Alternatively, the body may define a bypass passageway through which air may pass during inflation of the tire, the bypass passageway being preferably offset from the pin. In the latter embodiment, requirements for manufacturing tolerances are less strict than In embodiments, In which air Is to pass along the outer circumference of the pin. The pin may also be used to seal the inner of the device against dust from the exterior environment. Accordingly, the pin may define a head portion at that end of the device which is remote from the tire when the device is mounted to the tire, the head portion being arranged such that it abuts an inner collar portion of the body when the pin is In its first position.

A bottom portion of the body defines a cavity for receiving a valve of the tire centrally within the body, the cavity most preferably defining a threaded portion for screwing the device onto a threaded portion of a tire valve. A top portion of the body may be adapted to connect the inflation valve in the body to an inflation device, such as an air inflation nozzle. In order to ensure a short longitudinal extent of the device, the air conduit is preferably arranged radially displaced with respect to the cavity near the bottom portion.

As mentioned above, the first predetermined pressure level, i.e. the threshold pressure level of the device, may be varied by exchanging the resilient member with another resilient member having different properties. However, the pressure level may also be varied by a pressure adjusting system for varying the predetermined threshold pressure level, for example means for varying a cross-sectional area of the air conduit and/or means for varying a distortion of the resilient member.

In order to notify a user when the predetermined threshold pressure level has been reached or exceeded during inflation of the tire, there may be provided means for emitting an acoustic signal or means for emitting an optical signal when the air pressure in the chamber has reached or exceeds the predetermined pressure level. In one embodiment, the acoustic signal is generated as a whistling tone generated by excess air flowing past the resilient member. Once the excess air has escaped, excess air will no longer flow past the resilient member, and the whistling tone will stop. Alternatively, there may be provided electronic means, e.g. in the form of an electronic pressure sensor coupled to a light-emitting means or an electronically controlled sound source.

The invention further provides a kit comprising a plurality of pressure relief devices, wherein the devices define different predetermined pressure levels. Preferably, each device in the kit is easily identifiable by a user, so that each individual device in the kit may be associated with a particular pressure level. For example, the resilient member of each individual device of the kit may define a coloured outer surface portion, with the outer surface portions of the respective resilient members of the devices being coloured differently, and the kit may further comprise a list of colours and corresponding pressure levels. Alternatively or additionally, the predetermined threshold pressure level of each device of the kit may be indicated on a visible surface of the device.

In a further aspect there is provided a combination of a pressure relief device as disclosed herein and an inflatable tire. The pressure relief device may be permanently integrated with the tire, for example with a stem of the tire, e.g. to form one integrated unit, or it may be releasably attached to the stem of the tire. The invention also provides a rim for an inflatable tire, the rim comprising a pressure relief device according to the invention, the pressure relief device being optionally integrated a valve for inflation of the tire. Further, the invention provides a wheel comprising such a rim and an inflatable tire.

### Brief description of the drawings

The invention will now be further described with reference to the drawings, in which:
Figs. 1-3 illustrate a first embodiment of a device according to the invention;
Figs. 4-6 illustrate the embodiment of Figs. 1-3 when mounted to an inflation valve of a tire;
Figs. 7-9 illustrate a second embodiment of a device according to the invention;
Figs 10-12 illustrate the embodiment of Figs. 7-9 when mounted to an inflation valve of a tire;
Figs. 13-16 illustrate a third embodiment of a device according to the invention;
Figs. 17-19 illustrate a fourth embodiment of a device according to the invention;
Figs. 20-22 illustrate a fifth embodiment of a device according to the invention.

### Detailed description of the drawings

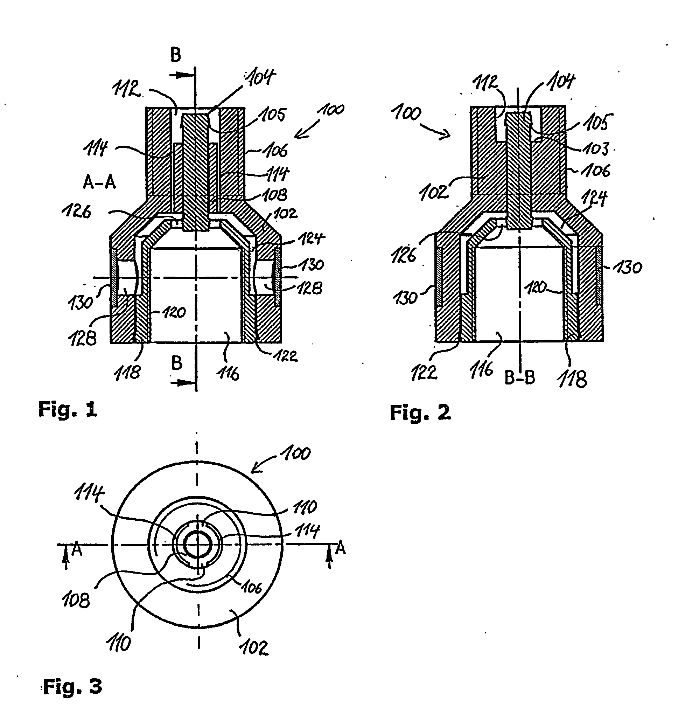

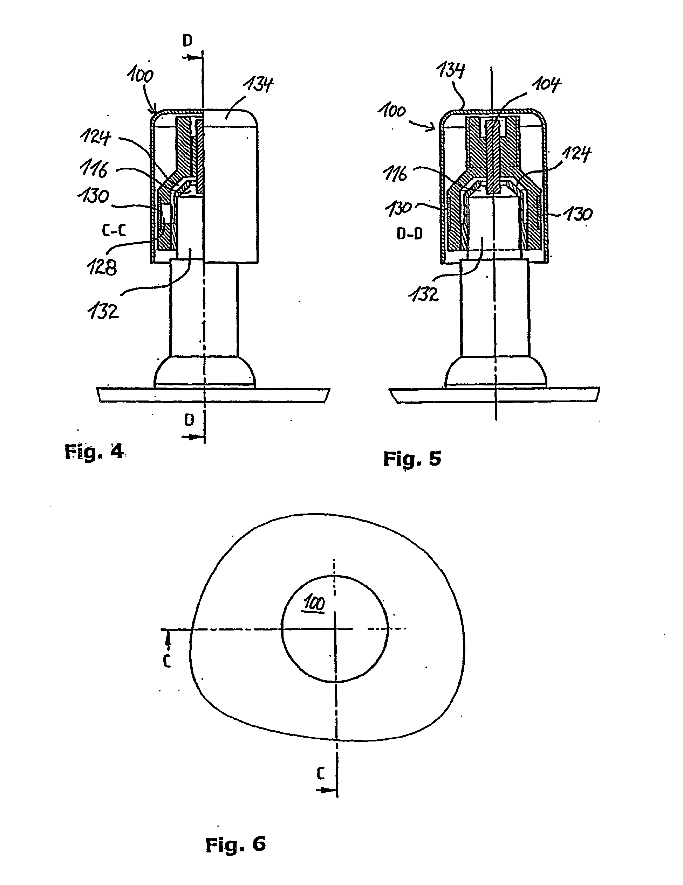

The pressure relief device 100 of Figs. 1-6 comprises a body 102, in an upper portion of which there is provided an inflation valve comprising a pin 104 for releasing a stem of a tire valve (not shown). An outer circumferential surface portion 106 of the upper portion of the body is threaded, so as to facilitate attachment of an air inflation device to the body. The pin 104 is slidingly mounted in a sleeve member 108 which is provided with outwardly extending protrusions 110 (see Fig. 3) which are squeeze-fitted into a passage 112 in the upper portion of the body. Gaps between an outer circumferential surface of the sleeve member 108 and an inner circumferential surface of the passage 112 define first bypass passageways 114. A bottom portion of the body defines a cavity 116 for receiving a valve 132 of a tire (see Figs. 4-6) centrally within the body. An insertion element 118 is fitted into the bottom portion of the body and held in place by a barbed portion 122. The insertion element defines a threaded portion 120 for attaching the pressure relief device to the tire valve 132. Between upper and outer surfaces of the insertion element 118 and an inner surface of the body there is provided a gap which defines a chamber 124, the chamber 124 communicating with the cavity 116 via a flow passage 126. Air conduits 128 are provided in a wall of the body in the lower portion thereof, the air conduits being normally closed/sealed by a ring-shaped resilient member 130 which is tightly fitted around a circumferential outer surface portion of the body in a reduced diameter section thereof. As shown in Figs. 4 and 5, a cap 134 may be provided for protection the body and the valve system in the body.

The pressure relief device is operated as follows: the device is screwed onto an outer surface portion of a tire valve 132 by means of the threaded portion 120 of the insertion element 118, the tire valve 132 being thereby received in the cavity 116. An inflation device, such as an air hose nozzle, which is connected to a pressurized source, is then attached to the upper portion of the body 102, with a stem of the inflation device (not shown) contacting the pin 104. The pin 104 is thereby pressed downwards until a flange portion 105 thereof abuts a surface 103 (see Fig. 2) of the wall of the body 102. The lower end of the pin 104 thereby contacts the upper end of the valve stem (not shown) associated with the tire. Air flows from the pressurized source to the interior of the tire via the bypass passageway 114 and the flow passage 126. The air pressure in the cavity 116, chamber 124 and air conduit 128 will be essentially equal to the tire pressure. The pressure in the air conduit 128 exerts an outwardly directed force on the ring-shaped resilient member 130. When the pressure in the air conduit 128 and thus in the tire reaches a certain threshold level, the ring-shaped resilient member is stretched outwardly, whereby the air conduit 128 is placed in communication with the surrounding atmosphere. The threshold pressure level is determined by the properties, such as elasticity and distortion, of the ring-shaped resilient member.

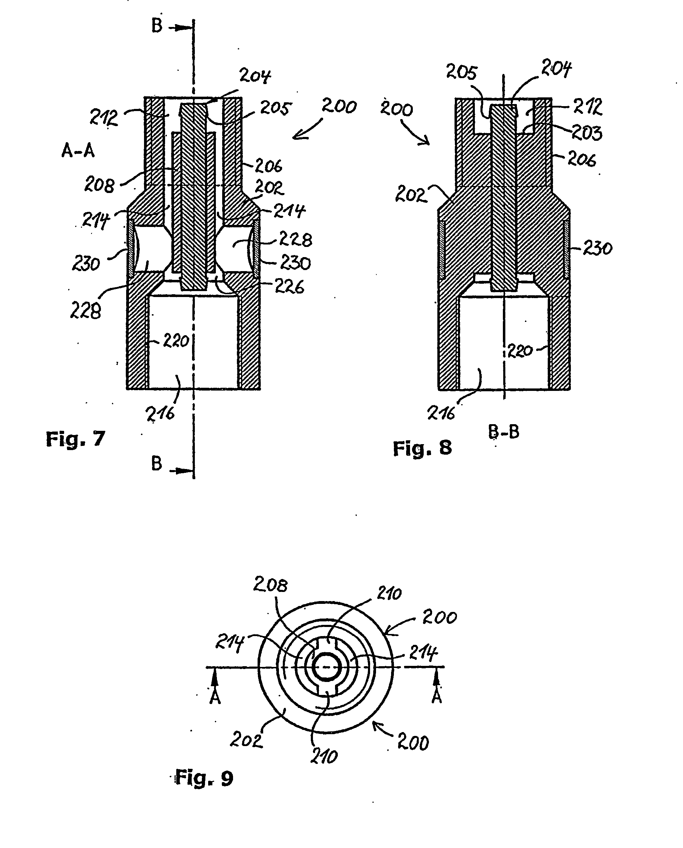

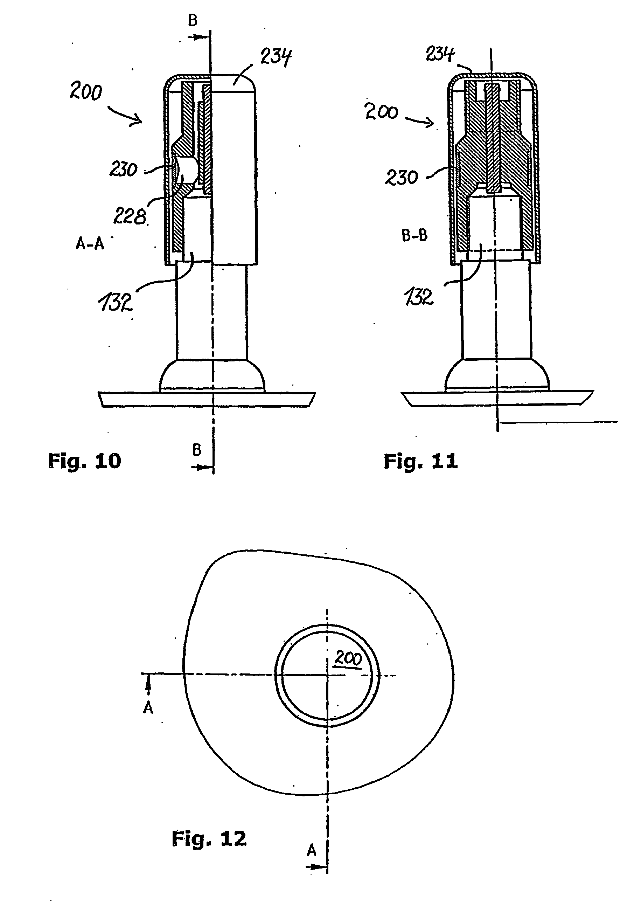

Figs. 7-12 show a second embodiment of a pressure relief device 200 according to the invention, comprising a body 202, in an upper portion of which there is provided an inflation valve comprising a pin 204 for releasing a stem of a tire valve (not shown). An outer circumferential surface portion 206 of the upper portion of the body is threaded, so as to facilitate attachment of an air inflation device to the body. The pin 204 is slidingly mounted in a sleeve member 208 which is provided with outwardly extending protrusions 210 (see Fig. 9) which are squeeze-fitted into a passage 212 in the upper portion of the body. Gaps between an outer circumferential surface of the sleeve member 208 and an inner circumferential surface of the passage 212 define bypass passageways 214. A bottom portion of the body defines a cavity 216 for receiving a valve 132 of a tire (see Figs. 4-6) centrally within the body. An inner circumferential surface of a lower portion of the body defines a threaded portion 220 for attaching the pressure relief device to the tire valve 132. Combined air conduits and chambers 228 provided in a wall of the body communicate with the cavity 216 via flow passages 226. The air conduits 228 are normally closed/sealed by a ring-shaped resilient member 230 which is tightly fitted around a circumferential outer surface portion of the body in a reduced diameter section thereof. As shown in Figs. 10 and 11, a cap 234 may be provided for protection the body and the valve system in the body.

The pressure relief device is operated as follows: the device is screwed onto an outer surface portion of a tire valve 132 by means of the threaded portion 220, the tire valve 132 being thereby received in the cavity 216. An inflation device, such as an air hose nozzle, which is connected to a pressurized source, is then attached to the upper portion of the body 202, with a stem of the inflation device (not shown) contacting the pin 204. The pin 204 is thereby pressed downwards until a flange portion 205 thereof abuts a surface 203 (see Fig. 8) of the wall of body 202. The lower end of the pin 204 thereby contacts the upper end of the valve stem (not shown) associated with the tire. Air flows from the pressurized source to the interior of the tire via the bypass passageways 214 and flow passages 226. The air pressure in the cavity 216 and air conduit 228 will be essentially equal to the tire pressure. The pressure in the air conduit 228 exerts an outwardly directed force on the ring-shaped resilient member 230. When the pressure in the air conduit 228 and thus in the tire reaches a certain threshold level, the ring-shaped resilient member is stretched outwardly, whereby the air conduit 228 is placed in communication with the surrounding atmosphere. As in the first embodiment, the threshold pressure level is determined by the properties, such as elasticity and distortion, of the ring-shaped resilient member.

In the embodiments of Figs. 1-12, the threaded portions 120 and 220 may be substituted by non-threaded portions. In embodiments, in which the portion is non-threaded, the body is made from a material which is sufficiently soft to allow a user to screw the device onto an outer threaded portion of a tire valve. The latter embodiment is advantageous in case it is desired to prevent reuse of the device once it has been mounted to a tire valve, e.g. in order to minimize the risk of mounting a device defining an inappropriate threshold pressure to a given tire.

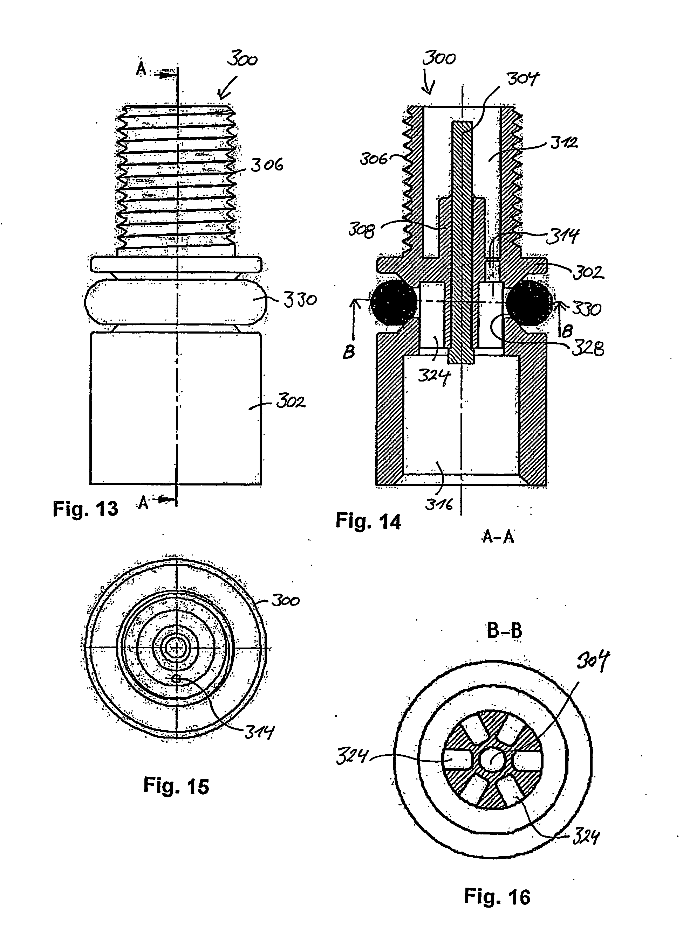

The device 300 of Figs. 13-15 includes a body 302, a pin 304 for releasing a stem of a tire valve, an outer threaded portion 306 for attachment of an air inflation device or of a protective cap, and a sleeve member 308 for the pin 304, the sleeve member being integral with the body 302. The upper portion of the body defines a passage 312 which is in communication with cavity 316 for receiving a valve of a tire via a passageway 314, which extends eccentrically with respect to the pin 304 (cf. also Fig. 15). Chambers 324, conduit 328 and resilient member 330 are arranged to provide an overpressure valve. As shown in Fig. 16, a plurality of chambers, e.g. six, may be circumferentially arranged in the body. The inner wall of the body in the area of the cavity 316 may be threaded or non-threaded.

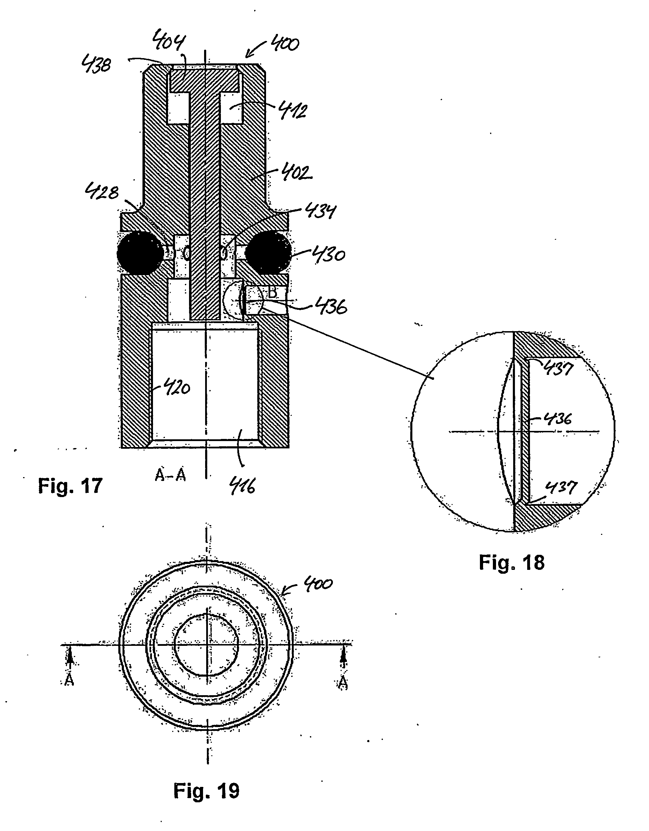

Similar to the previously described embodiments, the device 400 of Figs. 16-18 includes a body 402, and a pin 404 for releasing a stem of a tire valve. The body defines a sleeve for the pin 404. The upper portion of the body defines a passage 412 which is in communication with cavity 316 for receiving a valve of a tire via bypass passageway, which is arranged coaxially with the pin 404 around its outer periphery, i.e. between the pin and the inner wall of the sleeve defined by the body 402. Chamber or chambers 424, conduit 428 and resilient member 430 are arranged to provide an overpressure valve, and threaded portion 420 is provided for facilitating mounting of the device to a tire valve. Alternatively, as described above, the threaded portion 420 may be omitted. As in the embodiment of Figs. 13-16, a plurality of chambers 424 may be circumferentially arranged in the body. At 438, the head of the pin 404 abuts an inner collar portion of the housing, so as to provide a seal at the upper end of the device. The body has a weakened portion 436 in the form of a wall portion with a reduced thickness, cf. the detail of Fig. 18. The transition between the wall portions of nonreduced thickness and the wall portion having a reduced thickness may be abrupt or discontinuous and may define notches 437 to further weaken the material. In case the pressure in the cavity 432 and the chambers 424 rises to a level, at which the tire or the body risks to explode, e.g. in case a defect or an outer circumstance prevents the resilient member 430 from flexing, the body breaks at the weakened portion 436. Finally, the pin 404 defines an outer collar for limiting the pin's axial movement.

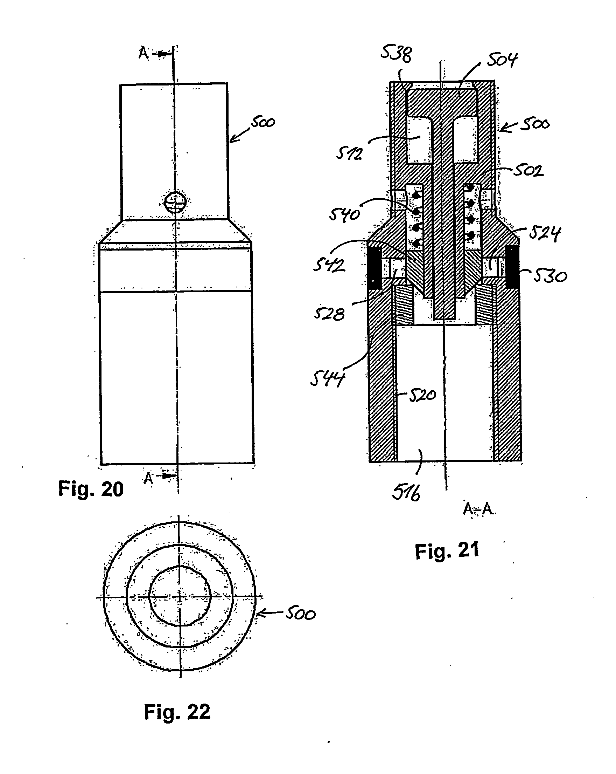

A yet further embodiment is shown in Figs. 20-22, the device 500 including a body 502, and a pin 504 for releasing a stem of a tire valve. The body 502 defines a sleeve portion for the pin 504. The upper portion of the body defines a passage 512 which is in communication with cavity 516 for receiving a valve of a tire via a passageway, which is arranged coaxially with the pin 504 around its outer periphery. Chamber or chambers 524, conduit 528 and resilient member 530 are arranged to provide an overpressure valve, and threaded portion 520 is provided for facilitating mounting of the device to a tire valve. Alternatively, as describe above, the threaded portion 520 may be omitted. As in the embodiment of Figs. 13-19, a plurality of chambers 524 may be circumferentially arranged in the body. At 538, the head of the pin 504 abuts an inner collar portion of the housing, so as to provide a seal at the upper end of the device. The overpressure valve further comprises a coil spring 540 arranged to provide a downward closing force on closure element 542, which in turn abuts an abutment element 544 which is screwed into the threaded portion 520 of the cavity 516. The coil 540 is distorted, such that a certain, predetermined pressure is required in the cavity 516 in order to lift the closure element 542 off its seat at the abutment element 544. The threshold pressure level at which the closure element lifts off the abutment element 544 may be larger than the threshold pressure level of the ring-shaped resilient member 530 to ensure that air may flow out of the device to its surroundings immediately when the closure element opens. However, in alternative embodiments, the threshold pressure level of the closure element 540 is smaller than the threshold pressure level of the resilient member 530, so that the conduit 528 cannot communicate with the exterior environment immediately upon opening of the closure element.

The body of any embodiment of the device according to the present invention may be manufactured entirely from a plastics material, such as by moulding, or from any suitable metal or metal alloy, such as brass, steel or stainless steel, or aluminium, there being optionally provided a surface coating to the materials. Disposable embodiments are preferably manufactured from a plastics material, for example a material having a hardness which is low enough to ensure that the threaded portions 120, 220, 420 and 520 are damaged after a single or very few uses. This ensures that the device is only used once or few times, so that the resilient member 130, 230, 330, 430, 530 is not worn to such an extent that the threshold pressure is significantly influenced by wear on the resilient member.

## Claims

1. A pressure relief device (100, 200, 300, 400, 500) for an inflatable tire, comprising:
- a body (102, 202, 302, 402, 502) having a chamber (124, 228, 324, 424, 524) therein and defining a circumferential outer surface portion;
- an inflation valve arranged in the body;
- an overpressure valve arranged in the body for releasing air when the air pressure in the chamber (124, 214, 324, 424, 524) exceeds a first predetermined pressure level, said overpressure valve comprising:
- at least one air conduit (128, 228, 328, 428, 528) extending from said chamber through the body (102, 202, 302, 402, 502) to said circumferential outer surface portion (106);
- a ring-shaped resilient member (130, 230, 330, 430, 530) which is contractively fitted around the circumferential outer surface portion, so as to keep the air conduit (128) in a normally closed state;
the properties and dimensions of the resilient member (130, 230, 330, 430, 530) being such that it is stretched when the air pressure in the chamber exceeds the first predetermined pressure level, so as to provide an air passage from the conduit (128, 228, 328, 428, 528) to an exterior environment
**characterised in that** a buttom portion of the body defines a cavity (116, 216, 316, 416, 516) for receiving a valve (132) of the tire centrally within the body, the cavity defining a threaded portion for screwing the device (100, 200, 300, 400, 500) onto a threaded portion of a tire valve (132).

2. A device according to claim 1, wherein the resilient member (130, 230, 330, 430, 530) is arranged in a reduced diameter section of the outer surface portion.

3. A device according to claim 1 or 2, wherein the overpressure valve further comprises a spring element (540) arranged in the housing, the spring element exerting a closing force on a closure element (542), so that the closure element opens at a second predetermined pressure level.

4. A device according to any of the preceding claims, wherein the body (103, 202, 302, 402, 502) comprises a weakened section (436), the properties of which are such that it breaks at a pressure which is higher than at least one of said first and second predetermined pressure level.

5. A device according to any of the preceding claims, further comprising a pin (104, 204, 304, 404, 504) for releasing a stem of a tire valve, the pin being arranged to be able to slide axially in a first passageway in the body (102, 202, 302, 402, 502) between a first position in which it cannot release the stem of the tire and a second position, in which it can release the stem, the body further defining a by pass passageway (114, 214, 314) through which air may pass during inflation of the tire.

6. A device according to any of claims 1-4, further comprising a pin (104, 204, 304, 404, 504) for releasing a stem of a tire valve, the pin being arranged to be able to slide axially in a first passageway in the body between a first position in which it cannot release the stem of the tire and a second position, in which it can release the stem, the pin having a head portion at that end of the device which is remote from the tire when the device (100) is mounted to the tire, the head portion being arranged such that it abuts an inner collar portion (538) of the body when the pin is in its first position.

7. A device according to any of the preceding claims, wherein a bottom portion of the body defines a cavity for receiving a valve (132) of the tire centrally within the body, and wherein a top portion of the body is adapted to be connected to an inflation device, the air conduit being arranged radially displaced with respect to said cavity (116, 216, 316, 416, 516) near the bottom portion.

8. A device according to any of the preceding claims, further comprising a protective cover (134; 234) for covering at least the top portion of the body (102, 202, 302, 402, 502) the cover being releasably connected to the body (102, 202, 302, 402, 502).

9. A device according to any of the preceding claims, further comprising a pressure adjusting system for varying at least one of the first and the second predetermined pressure level.

10. A device according to claim 9, wherein the pressure adjusting system comprises means for varying a cross-sectional area of the air conduit (128, 228, 328, 428, 528).

11. A device according to claim 9 or 10, wherein the pressure adjusting system comprises means for varying a distortion of the resilient member (130, 230; 330; 430; 530).

12. A device according to any of the preceding claims, further comprising means for emitting an acoustic signal when the air pressure in the chamber (124, 224, 324, 424, 524) exceeds at least one of the first and second predetermined pressure level.

13. A device according to any of the preceding claims, further comprising means for emitting an optical signal when the air pressure in the chamber (124, 224, 324, 424, 524) exceeds at least one of the first and second predetermined pressure level.

14. A kit comprising a plurality of pressure relief devices (100, 200, 300, 400, 500) according to any of the preceding claims, wherein the devices define different predetermined first and/or second pressure levels.

15. A kit according to claim 14, wherein each resilient member (130, 230, 330, 430, 530) defines a coloured outer surface portion, and wherein the outer surface portions of the respective resilient members of the devices are coloured differently, the kit further comprising a list of colours and corresponding pressure levels.

16. A combination of a pressure relief device (100, 200, 300, 400, 500) according to any of claims 1-12 and an inflatable tire.

17. A valve (132) for inflation of a tire, the valve being Integrated with a pressure relief device (100, 200, 300, 400, 500) according to any of claims 1-12, so that the valve and the pressure relief device form one integrated unit.

18. A rim for an inflatable tire, the rim comprising a pressure relief device (100, 200, 300, 400, 500) according to any of claims 1-12.

19. A rim according to claim 18, further comprising a valve for inflation of the tire, the valve being integrated with the pressure relief device (100, 200, 300, 400, 500), so that the valve and the pressure relief device form one integrated unit.

20. A wheel comprising a rim according to claim 18 or 19 and an inflatable tire.

## Patentansprüche

1. Druckausgleichsvorrichtung (100, 200, 300, 400, 500) für einen aufblasbaren Reifen mit
- einem Körper (102, 202, 302, 402, 502) mit einer Kammer (124, 228, 324, 424, 524), die in ihm angeordnet ist und einen umfänglichen äußeren Oberflächenbereich bildet,
- einem in dem Körper angeordneten Aufblasventil,
- einem in dem Körper angeordneten Überdruckventil zum Ablassen von Luft, wenn der Luftdruck in der Kammer (124, 214, 324, 424, 524) einen ersten vorbestimmten Druckwert übersteigt, wobei das Überdruckventil aufweist:
- wenigstens eine Luftleitung (128, 228, 328, 428, 528), die sich von der Kammer durch den Körper (102, 202, 302, 402, 502) zu dem umfänglichen äußeren Oberflächenbereich (106) erstreckt,
- ein ringartiges elastisches Teil (130, 230, 330, 430, 530), das sich zusammenziehend um den umfänglichen äußeren Oberflächenabschnitt angepasst ist, um **dadurch** die Luftleitung (128) in einem normalerweise geschlossenen Zustand zu halten,
wobei die Eigenschaften und Abmessungen des elastischen Teiles (130, 230, 330, 430, 530) so eingerichtet sind, dass es gestreckt wird, wenn der Luftdruck in der Kammer einen ersten vorbestimmten Druckwert übersteigt, um **dadurch** einen Luftdurchlass von der Leitung (128, 228, 328, 428, 528) zu der äußeren Umgebung zu schaffen, **dadurch gekennzeichnet, dass** ein Bodenbereich des Körpers einen Hohlraum (116, 216, 316, 416, 516) zur Aufnahme eines Ventiles (132) des mittig in dem Körper angeordneten Reifens bildet, wobei der Hohlraum einen Gewindebereich bildet, um die Vorrichtung (100, 200, 300, 400, 500) auf einen Gewindebereich eines Reifenventils (132) aufzuschrauben.

2. Vorrichtung nach Anspruch 1, bei der das elastische Teil (130, 230, 330, 430, 530) in einem reduzierten Durchmesserbereich des äußeren Oberflächenbereiches angeordnet ist.

3. Vorrichtung nach Anspruch 1 oder 2, bei der das Überdruckventil weiterhin ein Federelement (540) aufweist, das in dem Gehäuse angeordnet ist, wobei das Federelement auf ein Schließelement (542) eine Schließkraft ausübt, so dass das Schließelement bei einem zweiten vorbestimmten Druckwert öffnet.

4. Vorrichtung nach einem der vorangehenden Ansprüche, bei der der Körper (102, 202, 302, 402, 502) einen Schwächungsabschnitt (436) aufweist, dessen Eigenschaften so eingerichtet sind, dass er bei einem Druck bricht, der höher als wenigstens entweder der erste vorbestimmte Druckwert oder der zweite vorbestimmte Druckwert ist.

5. Vorrichtung nach einem der vorangehenden Ansprüche, die weiterhin einen Stift (104, 204, 304, 404, 504) zum Freigeben eines Zapfens eines Reifenventils aufweist, wobei der Stift dazu eingerichtet ist, in einem ersten in dem Körper (102, 202, 302, 402, 502) ausgebildeten Durchlass zwischen einer ersten Stellung, in der er den Zapfen des Reifens nicht freigeben kann, und einer zweiten Stellung axial verschiebbar ist, in der er den Zapfen freigeben kann, wobei der Körper weiterhin einen Beipassdurchlass (114, 214, 314) ausbildet, durch den während des Aufblasens des Reifens Luft durchtreten kann.

6. Vorrichtung nach einem der Ansprüche 1-4, die weiterhin einen Stift (104, 204, 304, 404, 504) zum Freigeben eines Zapfens eines Reifenventils aufweist, wobei der Stift dazu eingerichtet ist, in einem in dem Körper ausgebildeten ersten Durchlass zwischen einer ersten Stellung, in der er den Zapfen des Reifens nicht freigeben kann, und einer zweiten Stellung axial verschiebbar zu sein, in der er den Zapfen freigeben kann, wobei der Stift einen Kopfabschnitt an dem Ende der Vorrichtung aufweist, der von dem Reifen entfernt ist, wenn die Vorrichtung (100) an dem Reifen angebracht ist, wobei der Kopfabschnitt so eingerichtet ist, dass er an einen inneren Kragenabschnitt (538) des Körpers anschlägt, wenn der Stift in seiner ersten Stellung ist.

7. Vorrichtung nach einem der vorangehenden Ansprüche, bei der ein Bodenbereich des Körpers einen Hohlraum zum Aufnehmen eines Ventils (132) des Reifens mittig innerhalb des Körpers bildet und bei der ein Kopfbereich des Körpers dazu eingerichtet ist, mit einer Aufblasvorrichtung verbunden zu werden, wobei die Luftleitung in Bezug auf den Hohlraum (116, 216, 316, 416, 516) nahe des Bodenbereiches radial versetzt angeordnet ist.

8. Vorrichtung nach einem der vorangehenden Ansprüche, die weiterhin eine Schutzabdeckung (134, 234) zum Abdecken wenigstens des Kopfabschnittes des Körpers (102, 202, 302, 402, 502) aufweist, wobei die Abdeckung lösbar mit dem Körper (102, 202, 302, 402, 502) verbunden ist.

9. Vorrichtung nach einem der vorangehenden Ansprüche, die weiterhin ein Druckeinstellsystem zum Variieren wenigstens entweder des ersten vorbestimmten Druckwertes oder des zweiten vorbestimmten Druckwertes aufweist.

10. Vorrichtung nach Anspruch 9, bei der das Druckeinstellsystem Mittel zum Variieren eines Querschnittsbereiches der Luftleitung (128, 228, 328, 428, 528) aufweist.

11. Vorrichtung nach Anspruch 9 oder 10, bei der das Druckeinstellsystem Mittel zum Variieren einer Verformung des elastischen Teiles (130, 230, 330, 430, 530) aufweist.

12. Vorrichtung nach einem der vorangehenden Ansprüche, die weiterhin Mittel zum Abgeben eines akustischen Signals aufweist, wenn der Luftdruck in der Kammer (124, 224, 324, 424, 524) wenigstens entweder den ersten vorbestimmten Druckwert oder den zweiten vorbestimmten Druckwert übersteigt.

13. Vorrichtung nach einem der vorangehenden Ansprüche, die weiterhin Mittel zum Aussenden eines optischen Signals aufweist, wenn der Luftdruck in der Kammer (124, 224, 324, 424, 524) wenigstens entweder den ersten vorbestimmten Druckwert oder den zweiten vorbestimmten Druckwert übersteigt.

14. Einrichtung mit einer Anzahl von Druckausgleichsvorrichtungen (100, 200, 300, 400, 500) gemäß einem der vorangehenden Ansprüche, bei der die Vorrichtungen verschiedene vorbestimmte erste und/oder zweite Druckwerte bilden.

15. Einrichtung nach Anspruch 14, bei der jedes elastische Teil (130, 230, 330, 430, 530) einen farbigen äußeren Oberflächenbereich ausbildet und bei der die äußeren Oberflächenbereiche der betreffenden elastischen Teile der Vorrichtungen unterschiedlich gefärbt sind, wobei die Einrichtung eine Liste von Farben und zugeordneten Druckwerten umfasst.

16. Kombination aus einer Druckausgleichsvorrichtung (100, 200, 300, 400, 500) gemäß einem der Ansprüche 1-12 und einem aufblasbaren Reifen.

17. Ventil (132) zum Aufblasen eines Reifens, wobei das Ventil in einer Druckausgleichsvorrichtung (100, 200, 300, 400, 500) gemäß einem der Ansprüche 1-12 integriert ist, so dass das Ventil und die Druckausgleichsvorrichtung eine integrierte Einheit bilden.

18. Felge für einen aufblasbaren Reifen, wobei die Felge eine Druckausgleichsvorrichtung (100, 200, 300, 400, 500) gemäß einem der Ansprüche 1-12 aufweist.

19. Felge nach Anspruch 18, die weiterhin über ein Ventil zum Aufblasen des Reifens verfügt, wobei das Ventil ähnlich der Druckausgleichsvorrichtung (100, 200, 300, 400, 500) integriert ist, so dass das Ventil und die Druckausgleichsvorrichtung eine integrierte Einheit bilden.

20. Rad mit einer Felge gemäß Anspruch 18 oder 19 und mit einem aufblasbaren Reifen.

## Revendications

1. Dispositif limiteur de pression (100, 200, 300, 400, 500) pour pneu gonflable, comprenant :
- un corps (102, 202, 302, 402, 502) contenant une chambre (124, 228, 324, 424, 524) et définissant une partie de surface externe circulaire ;
- une valve de gonflage installée dans le corps ;
- une valve de surpression installée dans le corps afin de détendre l'air lorsque la pression d'air dans la chambre (124, 214, 324, 424, 524) dépasse un premier niveau de pression prédéfini, ladite valve de surpression comprenant :
- au moins un conduit d'air (128, 228, 328, 428, 528) s'étendant depuis ladite chambre à travers le corps (102, 202, 302, 402, 502) jusqu'à ladite partie de surface externe circulaire (106) ;
- un élément élastique en forme de bague (130, 230, 330, 430, 530), qui est monté en contraction autour de la partie de surface externe circulaire, de manière à maintenir le conduit d'air (128) en position normalement fermée ;
les propriétés et dimensions de l'élément élastique (130, 230, 330, 430, 530) étant telles qu'il est en extension lorsque la pression d'air dans la chambre dépasse le premier niveau de pression prédéfini, afin de fournir un passage d'air du conduit (128, 228, 328, 428, 528) vers le milieu extérieur,
**caractérisé en ce qu'**une partie basse du corps définit une cavité (116, 216, 316, 416, 516) destinée à recevoir une valve (132) du pneu en partie centrale intérieure du corps, la cavité définissant une partie filetée destinée à visser le dispositif (100, 200, 300, 400, 500) sur une partie filetée d'une valve de pneu (132).

2. Dispositif selon la revendication 1, dans lequel l'élément élastique (130, 230, 330, 430, 530) est installé dans une section de diamètre réduit de la partie de surface externe.

3. Dispositif selon la revendication 1 ou 2, dans lequel la valve de surpression comprend en outre un élément ressort (540) installé dans le logement, l'élément ressort exerçant une force de fermeture sur une élément de fermeture (542), de sorte que l'élément de fermeture s'ouvre à un second niveau de pression prédéfini.

4. Dispositif selon l'une quelconque des revendications précédentes, dans lequel le corps (102, 202, 302, 402, 502) comprend une section affaiblie (436) dont les propriétés sont telles qu'elle se brise à une pression supérieure à l'un au moins desdits premier et second niveaux de pression prédéfinis.

5. Dispositif selon l'une quelconque des revendications précédentes, comprenant en outre une goupille (104, 204, 304, 404, 504) permettant de dégager un embout de valve de pneu, la goupille étant conçue pour pouvoir coulisser axialement dans un premier passage ménagé dans le corps (102, 202, 302, 402, 502), entre une première position elle ne peut pas dégager l'embout du pneu et une seconde position où elle peut dégager l'embout, le corps définissant en outre un passage de dérivation (114, 214, 314) par lequel peut passer l'air pendant le gonflage du pneu.

6. Dispositif selon l'une quelconque des revendications 1 à 4, comprenant en outre une goupille (104, 204, 304, 404, 504) permettant de dégager un embout de valve de pneu, la goupille étant conçue pour pouvoir coulisser axialement dans un premier passage ménagé dans le corps, entre une première position elle ne peut pas dégager l'embout du pneu et une seconde position où elle peut dégager l'embout, la goupille possédant, au niveau de cette extrémité du dispositif, une partie de tête qui se trouve à distance du pneu lorsque le dispositif (100) est monté sur le pneu, la partie de tête étant conçue pour venir en butée contre une partie de collier interne (538) du corps lorsque la goupille se trouve dans sa première position.

7. Dispositif selon l'une quelconque des revendications précédentes, dans lequel une partie basse du corps définit une cavité destinée à recevoir une valve (132) du pneu en partie centrale intérieure du corps, et dans lequel une partie haute du corps est conçue pour être reliée à un dispositif de gonflage, le conduit d'air étant placé en décalage radial par rapport à ladite cavité (116, 216, 316, 416, 516), près de la partie basse.

8. Dispositif selon l'une quelconque des revendications précédentes, comprenant en outre un capuchon de protection (134, 134) destiné à couvrir au moins la partie haute du corps (102, 202, 302, 402, 502), le capuchon étant relié au corps (102, 202, 302, 402, 502) de manière amovible.

9. Dispositif selon l'une quelconque des revendications précédentes, comprenant en outre un système d'ajustement de pression destiné à faire varier l'un au moins des premier et second niveaux de pression prédéfinis.

10. Dispositif selon la revendication 9, dans lequel le système d'ajustement de pression comprend un moyen de faire varier une section transversale du conduit d'air (128,228, 328, 428, 528).

11. Dispositif selon la revendication 9 ou 10, dans lequel le système d'ajustement de pression comprend un moyen de faire varier une déformation de l'élément élastique (130, 230, 330, 430, 530).

12. Dispositif selon l'une quelconque des revendications précédentes, comprenant en outre un moyen d'émettre un signal acoustique lorsque la pression d'air dans la chambre (124, 224, 324, 424, 524) dépasse l'un au moins des premier et second niveaux de pression prédéfinis.

13. Dispositif selon l'une quelconque des revendications précédentes, comprenant en outre un moyen d'émettre un signal optique lorsque la pression d'air dans la chambre (124, 224, 324, 424, 524) dépasse l'un au moins des premier et second niveaux de pression prédéfinis.

14. Kit comprenant une pluralité de dispositifs limiteurs de pression (100, 200, 300, 400, 500) selon l'une quelconque des revendications précédentes, dans lequel les dispositifs définissent différents premiers et/ou seconds niveaux de pression prédéfinis.

15. Kit selon la revendication 14, dans lequel chaque élément élastique (130, 230, 330, 430, 530) définit une partie de surface externe colorée, et dans lequel les parties de surface externe des éléments élastiques respectifs des dispositifs sont de couleur différente, le kit comprenant en outre une liste des couleurs et des niveaux de pression correspondants.

16. Combinaison d'un dispositif limiteur de pression (100, 200, 300, 400, 500) selon l'une quelconque des revendications 1 à 12, et d'un pneu gonflable.

17. Valve (132) de gonflage d'un pneu, la valve étant intégrée à un dispositif limiteur de pression (100, 200, 300, 400, 500) selon l'une quelconque des revendications 1 à 12, de sorte que la valve et le dispositif limiteur de pression forment un ensemble intégré.

18. Jante pour pneu gonflable, la jante comprenant un dispositif limiteur de pression (100, 200, 300, 400, 500) selon l'une quelconque des revendications 1 à 12.

19. Jante selon la revendication 18, comprenant en outre une valve de gonflage du pneu, la valve étant intégrée au dispositif limiteur de pression (100, 200, 300, 400, 500) de sorte que la valve et le dispositif limiteur de pression forment un ensemble intégré.

20. Roue comprenant une jante selon la revendication 18 ou 19, et un pneu gonflable.
